# EUROPÄISCHE PATENTSCHRIFT

(11) **EP 4 464 876 B1**
(45) Veröffentlichungstag und Bekanntmachung des Hinweises auf die Patenterteilung: **23.09.2026**
(21) Anmeldenummer: 24175933.1
(22) Anmeldetag: 15.05.2024
(51) Int. Cl.: F01M 11/10, F01M 13/00, F01M 13/02, F02D 41/22

(54) **VERFAHREN ZUR DIAGNOSE EINES KURBELGEHÄUSESYSTEMS, KURBELGEHÄUSESYSTEM, FAHRZEUG UND COMPUTERPROGRAMMPRODUKT**
METHOD FOR DIAGNOSING A CRANKCASE SYSTEM, CRANKCASE SYSTEM, VEHICLE AND COMPUTER PROGRAM PRODUCT
PROCÉDÉ DE DIAGNOSTIC D'UN SYSTÈME DE CARTER DE VILEBREQUIN, SYSTÈME DE CARTER DE VILEBREQUIN, VÉHICULE ET PRODUIT PROGRAMME INFORMATIQUE

(30) Priorität: 17.05.2023 DE 102023204666
(43) Veröffentlichungstag der Anmeldung: 20.11.2024
(73) Patentinhaber: VOLKSWAGEN AG, 38440 Wolfsburg (DE)
(72) Erfinder: Hauptvogel, Mathias, 39356 Weferlingen (DE); Wassmann, Stephan, 38550 Isenbüttel (DE); Berski, Fabian, 30163 Hannover (DE)

(56) Entgegenhaltungen:
- DE-A1- 102018 220 428
- DE-A1- 102019 002 486
- JP-A- 2020 186 703
- US-A1- 2005 022 795
- US-A1- 2014 081 548
- US-A1- 2022 112 822
- US-B1- 10 767 590

## Beschreibung

Die Erfindung betrifft ein Verfahren zur Diagnose eines Kurbelgehäusesystems, ein Kurbelgehäusesystem, ein Fahrzeug sowie ein Computerprogrammprodukt.

Ein Kurbelgehäuse ist eine Vorrichtung, die im Wesentlichen als Lagerung der Kurbelwelle in Verbrennungsmotoren dient. Je nach Definition kann das Kurbelgehäuse ferner auch die Zylinder, den Kühlmantel und das Triebwerksgehäuse eines Verbrennungsmotors umfassen.

In einem Kurbelgehäuse kommt es beim Betrieb des Verbrennungsmotors immer zu gewissen Druckschwankungen.

Gase, die bei der Verbrennung am Zylinder vorbeiströmen, werden bei sogenannten geschlossenen Kurbelgehäuseentlüftungssystemen bzw. Positive Crankcase Ventilation (PCV) Systemen diese Gase wieder dem Ansaugtrakt des Verbrennungsmotors zugeführt.

Für den Betrieb des Motors ist es besonders wichtig, dass das Kurbelgehäusesystem intakt ist, da ansonsten die Lebensdauer des Verbrennungsmotors oder dessen Bestandteile erheblich reduziert sein kann.

Aus dem Stand der Technik sind unterschiedliche Diagnosesysteme für Kurbelgehäuse bekannt, etwa aus der DE 10 2015 116 483 A1, DE 10 2021 124 041 A1, US 2014/081548 A1, JP 2020 186703 A, US 2005/022795 A1, DE 10 2019 002 486 A1 und der US 2022/112822 A1.

Es besteht jedoch weiterhin Bedarf, eine besonders zuverlässige, genaue und günstige Diagnostik des Kurbelgehäuses bereitzustellen.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung ein Verfahren zur Diagnose eines Kurbelgehäusesystems, ein Kurbelgehäusesystem, ein Fahrzeug und ein Computerprogrammprodukt bereitzustellen, welche eine zuverlässige, genaue und günstige Diagnostik des Kurbelgehäuses ermöglichen.

Die voranstehende Aufgabe wird gelöst durch ein Verfahren mit den Merkmalen des Anspruchs 1, ein Kurbelgehäusesystem mit den Merkmalen des Anspruchs 5, ein Fahrzeug mit den Merkmalen des Anspruchs 6, sowie ein Computerprogrammprodukt mit den Merkmalen des Anspruchs 7. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Kurbelgehäusesystem, dem erfindungsgemäßen Fahrzeug und/oder dem erfindungsgemäßen Computerprogrammprodukt und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zur Diagnose eines Kurbelgehäusesystems vorgesehen, umfassend:
- Bestimmen eines Signalverlaufs eines Ansaugdruckes in einem Ansaugbereich eines Kurbelgehäuses, insbesondere durch einen Ansaugdrucksensor,
- Bestimmen eines Signalverlaufs eines zweiten Druckes in einem stromabwärts des Ansaugbereichs gelegenen Bereichs des Kurbelgehäuses, insbesondere durch einen zweiten Drucksensor,
- Berechnen einer Ähnlichkeit zwischen dem Signalverlauf des Ansaugdruckes und dem Signalverlauf des zweiten Druckes, insbesondere durch einen Prozessor, und
- Vergleichen der Ähnlichkeit mit einem Ähnlichkeitssollwertbereich, insbesondere durch den Prozessor,
wobei eine Abweichung der Ähnlichkeit vom Ähnlichkeitssollwertbereich auf einen nicht ordnungsgemäßen Zustand des Kurbelgehäusesystems hinweist.

Bei dem Verfahren kann es sich insbesondere um ein computerimplementiertes Verfahren handeln.

Die Verfahrensschritte können zumindest teilweise gleichzeitig und/oder zeitlich nacheinander ablaufen, wobei die Reihenfolge der Verfahrensschritte nicht durch die angegebene Reihenfolge begrenzt ist, sodass einzelne Schritte in unterschiedlicher Reihenfolge durchführbar sind. Ferner können einzelne oder sämtliche Schritte wiederholt durchgeführt werden.

Ein Kurbelgehäuse, auch Motorgehäuse oder Motorblock genannt, kann als eine Baugruppe, aufweisend zumindest einen Zylinder, einen Zylinderkühlmantel, eine Kurbelwelle, ein Kurbelwellenlager oder eine Ölwanne aufgefasst werden.

Mit anderen Worten kann eine Methode zur Bestimmung eines Zustandes eines Kurbelgehäusesystems vorgesehen sein, wobei zumindest zwei Drücke in unterschiedlichen Bereichen des Kurbelgehäusesystems aufgenommen und deren Messwertverläufe dahingehend verglichen werden, ob diese gleichartige Änderungen aufweisen. Zumindest ein Druck wird dabei in einem Bereich des Kurbelgehäuses aufgenommen, der dazu ausgeführt ist, dem Kurbelgehäuse, insbesondere einer Brennkammer des Verbrennungsmotors, ein Fluid, insbesondere Luft und/oder Luftgemisch zuzuführen. Ein Fluid kann insbesondere Treibstoff und/oder nicht vollständig verbrannte Produkte des Verbrennungsprozesses des Verbrennungsmotors umfassen. Ein weiterer Druck wird in einem Bereich des Kurbelgehäuses aufgenommen, der stromabwärts des ersten Bereichs gelegen ist. Zeigen die beiden Drücke stark unterschiedliche Verläufe, kann dies bedeuten, dass das Kurbelgehäusesystem zumindest einen nicht ordnungsgemäßen Zustand, insbesondere eine Leckage oder Blockierung, aufweist. In einem ordnungsgemäßen Zustand bleiben die Druckverhältnisse im Kurbelgehäuse in Bezug auf eine umgebende Atmosphäre in einem vergebenen Bereich und im Motor entstehende Leckgase (auch "Blowby"-Gase genannt) werden wie konstruktiv vorgesehen gesammelt und umweltgerecht abgeführt. Anders ausgedrückt kann jeder von dem ordnungsgemäßen Zustand abweichende Zustand einem nicht ordnungsgemäßen Zustand entsprechen.

Im Zusammenhang mit der Erfindung kann unter einer Diagnose ein Vorgang verstanden werden, um den Zustand eines Systems zu beurteilen. Die Diagnose kann insbesondere eine Feststellung umfassen, ob ein Defekt vorliegt oder nicht. Ferner kann die Diagnose auch eine abgestufte Aussage über den Status des Systems umfassen. Es kann vorgesehen sein, dass die Diagnose eine Angabe der Dichtigkeit, insbesondere in Prozent, wobei bevorzugt 100 % einem wie vorgesehen dichten System und 0 % einem defekten System entspricht, umfasst. Umfassende Diagnosen bieten der Vorteil, dass diese bei der Wartung des Kurbelgehäuses genutzt werden können, sodass die Wartung vereinfacht und Kosten eingespart werden können.

Unter einem Bestimmen eines Signalverlaufs kann die Aufnahme zumindest zweier, insbesondere einer Vielzahl von, Messwerten verstanden werden. Die Bestimmung des Signalverlaufs kann als eine Messung zumindest einer Variable verstanden werden, welche sich über die Zeit ändert.

Der Ansaugdruck kann als Druck verstanden werden, welcher an einer Position im Ansaugbereich des Kurbelgehäuses herrscht. Das angesaugte Fluid kann einem Verbrennungsmotor zur Verbrennung in einer oder mehreren Verbrennungskammern bereitgestellt werden.

Die im Zusammenhang mit dem erfindungsgemäßen Verfahren beschriebenen Merkmale, die sich auf ein zu diagnostizierendes Kurbelgehäusesystem beziehen, beziehen sich gleichsam auf ein erfindungsgemäßes Kurbelgehäusesystem, das später näher beschrieben ist.

Der Ansaugbereich des Kurbelgehäuses kann als Baugruppe aufgefasst werden, welche dazu ausgeführt ist, dem Kurbelgehäuse, insbesondere dem Kurbelgehäuseblock, ein Fluid, insbesondere Luft und/oder ein Luftgemisch bereitzustellen. Der Ansaugbereich kann zumindest ein Saugrohr umfassen. Im Saugrohr kann zumindest eine Drosselklappe angeordnet sein.

Das Kurbelgehäuse kann einen Kurbelgehäuseblock aufweisen, in welchem Zylinder und eine Kurbelwelle anordenbar sind. Ferner kann das Kurbelgehäuse eine Ölwanne aufweisen. Ferner umfasst das Kurbelgehäuse sowohl den Ansaugbereich als auch den stromabwärts des Ansaugbereichs gelegenen Bereich, welcher insbesondere als Entlüftungsbereich ausgeführt sein kann.

Der zweite Druck wird in einem Bereich erfasst, der sich in seiner Position von dem Ansaugbereich unterscheidet. Es ist vorgesehen, dass der zweite Druck stromabwärts des Ansaugbereiches gemessen wird. Dabei bezieht sich stromabwärts auf die Bewegungsrichtung des Fluids innerhalb des Kurbelgehäusesystems. Je nach Betriebsmodus kann das Fluid in unterschiedlichen Strömungspfaden geführt werden.

Es kann vorgesehen sein, dass der zweite Druck als Entlüftungsdruck ausgebildet ist. Der Entlüftungsdruck kann als derjenige Druck verstanden werden, welcher an einer Position in einem Entlüftungsbereich des Kurbelgehäuses herrscht.

Der Entlüftungsbereich kann als Baugruppe aufgefasst werden, welche dazu ausgeführt ist, ein Fluid, insbesondere Luft und/oder ein Luftgemisch vom Kurbelgehäuse, insbesondere von dem Kurbelgehäuseblock, abzuführen. Es kann vorgesehen sein, dass der Entlüftungsbereich ein Fluid, insbesondere Luft und/oder ein Luftgemisch, vom Kurbelgehäuse weg hin zum Ansaugbereich des Kurbelgehäuses, insbesondere zu einer oder mehreren Verbrennungskammern, führt.

Alternativ oder in Ergänzung kann der zweite Druck als Druck in einer Kurbelgehäusebelüftungsleitung und/oder Druck im Kurbelgehäuseblock ausgeführt sein.

Das Kurbelgehäusesystem kann als geschlossenes Kurbelgehäusesystem ausgeführt sein. Mit anderen Worten kann vorgesehen sein, dass Luft und/oder ein Luftgemisch aus dem Entlüftungsbereich wieder dem Ansaugbereich zugeführt wird.

Eine Ähnlichkeit kann als ein, insbesondere mathematisches, Maß für die Gleichartigkeit zweier Signalverläufe aufgefasst werden. Es kann vorgesehen sein, dass die Ähnlichkeit ein Maß für die Änderung des Signalverlaufs als Funktion der Zeit ist. Die Ähnlichkeit wäre dann hoch, wenn sich beide Signalverläufe auf einer ähnlichen Zeitskala ändern. Es kann sein, dass die Ähnlichkeit der Signalverläufe hoch ist, wenn diese sich um einen, insbesondere absoluten, ähnlich hohen Wert im Verlauf der Zeit ändern.

Das Berechnen der Ähnlichkeit mit einem Ähnlichkeitssollwertbereich kann als eine Methode aufgefasst werden, welche dazu geeignet ist, einen quantitativen Wert für die Ähnlichkeit der Signalverläufe zu bestimmen. Varianten dieser Methode werden im Zusammenhang mit den Unteransprüchen beschrieben.

Ein Ähnlichkeitssollwertbereich kann ein Wertebereich sein, welcher spezifisch für den Zustand des Kurbelgehäusesystems ist. Der Ähnlichkeitssollwertbereich kann auch als ein Schwellwert ausgeführt sein. Es kann ferner vorgesehen sein, dass zumindest zwei Ähnlichkeitssollwertbereiche vorgesehen sind, wobei ein erster Ähnlichkeitssollwertbereich einem wie vorgesehen dichten Kurbelgehäusesystem und ein zweiter Ähnlichkeitssollwertbereich einem betriebsfähigen Kurbelgehäusesystem mit einer messbaren Störung entspricht.

Es kann ferner vorgesehen sein, dass bei einer Abweichung der Ähnlichkeit vom Ähnlichkeitssollwertbereich eine Maßnahme ausgelöst wird. Eine Maßnahme kann als Signal, insbesondere zumindest akustisch oder optisch ausgeführt sein. Ferner kann das Signal von einer zentralen Steuereinheit eines Fahrzeuges, das das Kurbelgehäusesystem umfasst, empfangbar sein. Es kann ebenfalls vorgesehen sein, dass die Maßnahme zumindest ein Eintragen oder ein Hochsetzen eines Zählerstandes in einem Fehlerspeicher umfasst. Hierdurch kann beispielsweise im Fehlerfall der Motor abgeschaltet oder ein Benutzer des Fahrzeuges dazu aufgefordert werden, umgehend das Fahrzeug abzustellen oder eine Werkstatt aufzusuchen. Dadurch kann die Lebensdauer des Kurbelgehäusesystems verbessert werden. Ferner kann vorgesehen sein, dass bei einer Abweichung der Ähnlichkeit vom Ähnlichkeitssollwertbereich das Aufladen durch den Turbolader verhindert wird. Dadurch kann vermieden werden, Abgase in die Umwelt abzuleiten, falls ein Leitungsdefekt vorliegt. Ebenfalls kann vorgesehen sein, dass die Maßnahme zumindest eine Reduktion einer Geschwindigkeit des Fahrzeuges, eines Moments, einer Leistung des Motors, einer verbleibende Fahrzeit oder eine Übermittlung des festgestellten nicht ordnungsgemäßen Zustandes an eine Erfassungsstelle, insbesondere zumindest den Fahrzeughersteller oder eine Werkstatt, umfasst.

Insgesamt wird durch das erfindungsgemäße Verfahren zur Diagnose eines Kurbelgehäusesystems der Vorteil erreicht, dass eine zuverlässige, genaue und günstige Diagnostik des Kurbelgehäusesystems ermöglicht wird. Die Bestimmung der Signalverläufe des Ansaugdruckes und des Entlüftungsdruckes bietet Informationen über zwei Bereiche des Kurbelgehäuses, die unabhängig voneinander erfassbar sind und damit sogar für sich genommen eine gewisse Informationsredundanz bieten. Grundsätzlich ist bei einem ordnungsgemäß abgedichteten Kurbelgehäusesystem davon auszugehen, dass der Signalverlauf des Ansaugdruckes und des Entlüftungsdruckes ähnlich auf Änderungen im System reagieren. Bei einer Abweichung dieser Ähnlichkeit, die erfindungsgemäß bestimmt und mit einem Ähnlichkeitssollwert verglichen wird, ist es möglich, dass das Kurbelgehäusesystem einen vom ordnungsgemäßen Zustand abweichenden Zustand, insbesondere ein Leck oder eine Blockade, aufweist. Der Vergleich ermöglicht es also, dass eine Störung zuverlässig und auf einfache Weise entdeckt werden kann. Dadurch kann auch die Lebensdauer des Kurbelgehäusesystems verlängert werden.

Ferner kann bei einem erfindungsgemäßen Verfahren vorgesehen sein, dass das Berechnen zumindest ein Berechnen einer Korrelation oder das Berechnen einer Kovarianz zwischen dem Signalverlauf des Ansaugdruckes und dem Signalverlauf des zweiten Druckes umfasst. Sowohl Korrelation als auch Kovarianz lassen sich auf verhältnismäßig einfache Art und Weise, insbesondere nahezu in Echtzeit, bestimmen. Hierdurch steht ein besonders schnelles, zuverlässiges Maß für die Ähnlichkeit der Signalverläufe zur Verfügung.

Weiterhin ist es bei einem erfindungsgemäßen Verfahren denkbar, dass das Berechnen zumindest ein Berechnen einer linearen Funktion umfasst, deren Verlauf im Wesentlichen dem Signalverlauf des Ansaugdruckes und dem Signalverlauf des zweiten Druckes entspricht oder ein Durchführen einer Regressionsanalyse umfasst. Die Bestimmung einer linearen Funktion bietet den Vorteil, dass aus der linearen Funktion eine Ähnlichkeit der Signalverläufe einfach und schnellbestimmbar ist. Bei einer Regressionsanalyse kann eine Vielzahl von statistischen Verfahren zur Bestimmung der Ähnlichkeit ausgewählt werden. Durch die Regressionsanalyse wird also der Vorteil erreicht, dass eine auf den konkreten Anwendungsfall zugeschnittene statistische Methode gewählt werden kann, welche den besten Kompromiss aus Schnelligkeit der Ausführung und Genauigkeit der Analyse ausgewählt werden kann.

Im Rahmen der Erfindung ist es weiterhin denkbar, dass das Bestimmen des Signalverlaufs des Ansaugdruckes in dem Ansaugbereich als ein Bestimmen des Signalverlaufs des Ansaugdruckes zumindest in einem Saugrohr stromabwärts einer Drosselklappe oder stromaufwärts der Drosselklappe ausgeführt ist. Bei einer Bestimmung des Ansaugdruckes im Saugrohr stromabwärts einer Drosselklappe kann der Vorteil erreicht werden, dass ein gegenüber dem Umgebungsdruck verringerter Druck gemessen werden kann. Bei einer Messung stromaufwärts der Drosselklappe liegt entweder ein Umgebungsdruck oder ein Druck an, welcher durch einen Abgasturbolader gegenüber dem Druck stromabwärts der Drosselklappe erhöht ist. Es kann ebenfalls vorgesehen sein, dass der Ansaugdruck als Mittelwert von Messungen stromabwärts der Drosselklappe und stromaufwärts der Drosselklappe ausgeführt ist. Hierdurch können Messfehler eines einzelnen Sensors abgemildert werden. Es kann ferner vorgesehen sein, dass auf Basis von Druckmessungen stromabwärts der Drosselklappe und stromaufwärts der Drosselklappe eine Plausibilitätsanalyse durchgeführt wird. Hierdurch wird der Vorteil erreicht, dass ein defekter Sensor erkennbar ist.

Im Rahmen der Erfindung ist es weiterhin denkbar, dass das Bestimmen des Signalverlaufs des zweiten Druckes in dem stromabwärts des Ansaugbereichs gelegenen Bereich als Bestimmen des Signalverlaufs des zweiten Druckes zumindest in einer Entlüftungsleitung des Kurbelgehäuses, in einem Kurbelgehäuseblock oder in einer Belüftungsleitung des Kurbelgehäuses ausgeführt ist. Die Messung des zweiten Druckes kann je nach Betriebsmodus des Verbrennermotors vorteilhaft sein. Ferner kann die Kombination aus mehreren Messungen genutzt werden, um eine Plausibilitätsanalyse durchzuführen um derart die Funktionsfähigkeit der Drucksensoren zu überprüfen. Ferner können Mittelwerte gebildet werden, um die Auswirkungen einzelner Ausreißer auf die Berechnung der Ähnlichkeit zu verringern.

Vorzugsweise kann bei einem erfindungsgemäßen Verfahren vorgesehen sein, dass zumindest das Berechnen der Ähnlichkeit erfolgt, wenn eine Berechnungsbedingung zumindest für den Ansaugdruck oder den zweiten Druck erfüllt ist, oder der Signalverlauf zumindest des Ansaugdruckes oder des zweiten Druckes nur Werte umfasst, bei deren Erfassung eine Aufzeichnungsbedingung erfüllt ist. Mit anderen Worten kann das Berechnen und/oder das Aufnehmen der Werte nur dann erfolgen, wenn vorbestimmte Voraussetzungen, insbesondere während eines Ladedruckaufbaus, eines Ladedruck Haltens oder eines Ladedruckabbaus, erfüllt sind. Die Berechnungsbedingung und/oder die Aufzeichnungsbedingung kann beispielsweise umfassen, dass der Verbrennungsmotor in Betrieb ist, und/oder dass der Ansaugdruck, insbesondere der Ladedruck, in einem vorbestimmten Wertebereich, insbesondere zwischen 1100 hPa und 1500 hPa liegt. Ferner kann vorgesehen sein, dass die Berechnungsbedingung und/oder die Aufzeichnungsbedingung als eine Zeitverzögerung, insbesondere nach einem Ladedruckaufbau, ausgeführt ist. Durch das Vorsehen von Berechnungsbedingungen und/oder Aufzeichnungsbedingungen wird der Vorteil erreicht, dass die Diagnose besonders zuverlässig wird, da Ausreißer vorgefiltert werden und keine Messungen bzw. Auswertungen zu einem Zeitpunkt stattfinden, an dem eine Diagnose nicht möglich oder nicht sinnvoll ist.

Gemäß einem weiteren Aspekt der Erfindung ist ein Kurbelgehäusesystem vorgesehen, aufweisend:
- einen Ansaugdrucksensor, der dazu ausgeführt ist, einen Signalverlauf eines Ansaugdruckes in einem Ansaugbereich eines Kurbelgehäuses zu bestimmen,
- einen zweiten Drucksensor, der dazu ausgeführt ist, einen Signalverlauf eines zweiten Druckes in einem stromabwärts des Ansaugbereichs gelegenen Bereich des Kurbelgehäuses zu bestimmen,
- einen Prozessor, der dazu ausgeführt ist, eine Ähnlichkeit zwischen dem Signalverlauf des Ansaugdruckes und dem Signalverlauf des zweiten Druckes zu berechnen und die Ähnlichkeit mit einem Ähnlichkeitssollwertbereich zu vergleichen,
wobei eine Abweichung der Ähnlichkeit vom Ähnlichkeitssollwertbereich auf einen nicht ordnungsgemäßen Zustand des Kurbelgehäusesystems hinweist.

Weiterhin kann bei einem erfindungsgemäßen Kurbelgehäusesystem vorteilhafterweise vorgesehen sein, dass das Kurbelgehäusesystem dazu ausgeführt ist, ein erfindungsgemäßes Verfahren auszuführen.

Somit bringt ein erfindungsgemäßes Kurbelgehäusesystem die gleichen Vorteile mit sich, wie sie bereits ausführlich mit Bezug auf ein erfindungsgemäßes Verfahren beschrieben worden sind.

Gemäß einem weiteren Aspekt der Erfindung ist ein Fahrzeug vorgesehen, aufweisend zumindest ein erfindungsgemäßes Kurbelgehäusesystem.

Somit bringt ein erfindungsgemäßes Fahrzeug die gleichen Vorteile mit sich, wie sie bereits ausführlich mit Bezug auf ein erfindungsgemäßes Verfahren und/oder ein erfindungsgemäßes Kurbelgehäusesystem beschrieben worden sind.

Gemäß einem weiteren Aspekt der Erfindung ist ein Computerprogrammprodukt vorgesehen, umfassend Befehle, die bei der Ausführung des Programms durch einen Computer, insbesondere einen Prozessor eines erfindungsgemäßen Kurbelgehäusesystems, diesen veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren, ein erfindungsgemäßes Kurbelgehäusesystem und/oder ein erfindungsgemäßes Fahrzeug beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1:: ein erfindungsgemäßes Verfahren,
- Fig. 2:: beispielhafte Messwerte, und
- Fig. 3:: eine beispielhafte Bestimmung von Korrelation und Kovarianz für unterschiedliche Situationen im Kurbelgehäusesystem, und
- Fig. 4:: ein erfindungsgemäßes Kurbelgehäusesystem.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

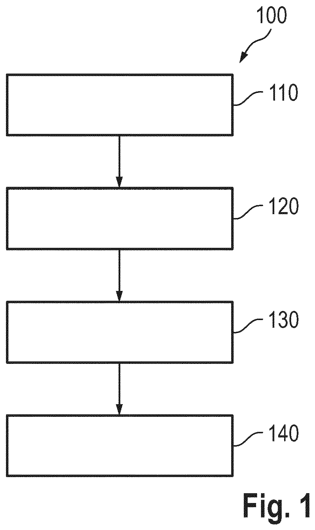

Figur 1 zeigt schematisch ein erfindungsgemäßes Verfahren 100 zur Diagnose eines Kurbelgehäusesystems 200. Das Verfahren 100 umfasst ein Bestimmen 110 eines Signalverlaufs eines Ansaugdruckes 10 in einem Ansaugbereich 220 eines Kurbelgehäuses 210. Ferner umfasst das Verfahren 100 ein Bestimmen 120 eines Signalverlaufs eines zweiten Druckes 20 in einem stromabwärts des Ansaugbereichs gelegenen Bereich 230 des Kurbelgehäuses 210. Ebenfalls weist das Verfahren 100 ein Berechnen 130 einer Ähnlichkeit zwischen dem Signalverlauf des Ansaugdruckes 10 und dem Signalverlauf des zweiten Druckes 20 auf. Teil des Verfahrens 100 ist auch ein Vergleichen 140 der Ähnlichkeit mit einem Ähnlichkeitssollwertbereich. Eine Abweichung der Ähnlichkeit vom Ähnlichkeitssollwertbereich weist auf einen nicht ordnungsgemäßen Zustand des Kurbelgehäusesystems 200 hin.

Insgesamt wird durch das erfindungsgemäße Verfahren 100 zur Diagnose eines Kurbelgehäusesystems 200 der Vorteil erreicht, dass eine zuverlässige, genaue und günstige Diagnostik des Kurbelgehäusesystems 200 ermöglicht wird. Die Bestimmung der Signalverläufe des Ansaugdruckes 10 und des zweiten Druckes 20 bietet Informationen über zwei Bereiche des Kurbelgehäuses 210, die unabhängig voneinander erfassbar sind und damit sogar für sich genommen eine gewisse Informationsredundanz bieten. Grundsätzlich ist bei einem ordnungsgemäß abgedichteten Kurbelgehäusesystem 200 davon auszugehen, dass der Signalverlauf des Ansaugdruckes 10 und des zweiten Druckes 20 ähnlich auf Änderungen im System reagieren. Bei einer Abweichung dieser Ähnlichkeit, die erfindungsgemäß bestimmt und mit einem Ähnlichkeitssollwert verglichen wird, ist es möglich, dass das Kurbelgehäusesystem 200 eine Störung aufweist. Der Vergleich ermöglicht es also, dass eine Störung zuverlässig und auf einfache Weise entdeckt werden kann. Dadurch kann auch die Lebensdauer des Kurbelgehäusesystems 200 verlängert werden.

Ferner kann bei einem erfindungsgemäßen Verfahren 100 vorgesehen sein, dass das Berechnen 130 zumindest ein Berechnen 130 einer Korrelation oder das Berechnen 130 einer Kovarianz zwischen dem Signalverlauf des Ansaugdruckes 10 und dem Signalverlauf des zweiten Druckes 20 umfasst. Sowohl Korrelation als auch Kovarianz lassen sich auf verhältnismäßig einfache Art und Weise, insbesondere nahezu in Echtzeit, bestimmen. Hierdurch steht ein besonders schnelles, zuverlässiges Maß für die Ähnlichkeit der Signalverläufe zur Verfügung.

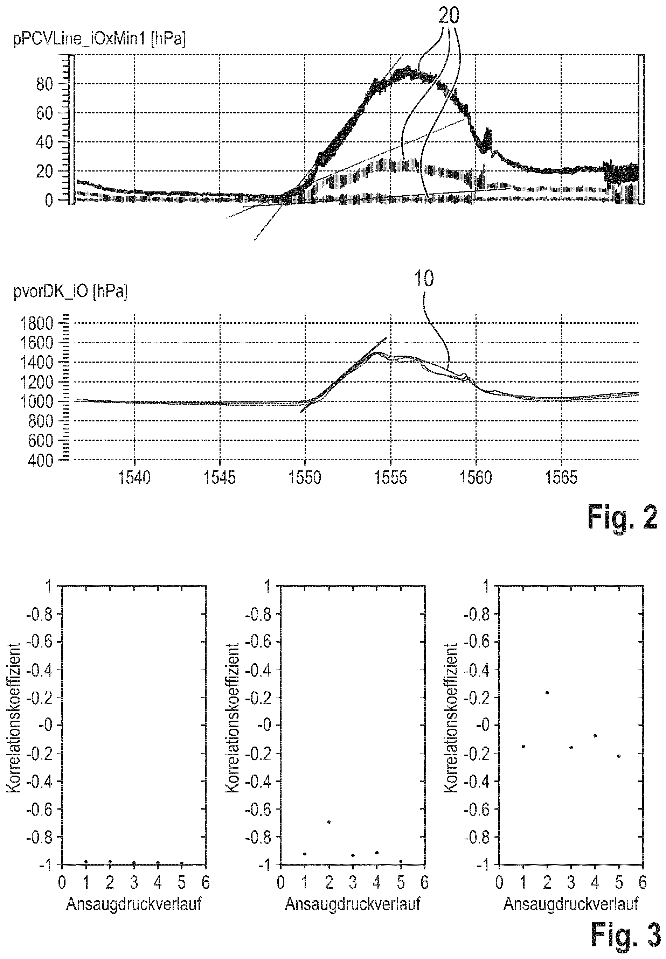

Fig. 2 zeigt Beispielhaft eine Darstellung von Messwerten für einen zweiten Druck 20 (oben) und einen Ansaugdruck 10 (unten) für verschiedene Zustände des Kurbelgehäusesystems 200 als Funktion der Zeit. Mit anderen Worten sind die Signalverläufe von zweiten Druck 20 und Ansaugdruck 10 gezeigt. Beide Graphen 10, 20 teilen sich dabei eine gemeinsame Zeitachse. Der zweite Druck 20 ist invertiert dargestellt. Im ordnungsgemäßen Zustand sind die Signalverläufe von zweiten Druck 20 und Ansaugdruck 10 ähnlich, insbesondere proportional oder antiproportional. Insbesondere steigen und sinken sie zu ähnlichen Zeitpunkten um relativ auf das jeweilige Signal bezogen um ähnliche Werte. Dieser Fall entspricht dem obersten Signalverlauf des zweiten Druckes 20.

Treten jedoch Leckagen in einem stromabwärts des Ansaugbereichs gelegenen Bereich 230 des Kurbelgehäuses 210 auf, so ergeben sich die beiden unteren Signalverläufe für den zweiten Druck 20 (oberer Signalverlauf bei einem Leck von 6 mm, unterer Signalverlauf bei einem Leck von 12 mm). Der Signalverlauf für den Ansaugdruck 10 bleibt im Wesentlichen gleich. Dies führt dazu, dass die Ähnlichkeit der Signalverläufe des Ansaugdruckes 10 und des zweiten Druckes 20 bei einer Leckage abnimmt.

Weiterhin ist es bei einem erfindungsgemäßen Verfahren 100 denkbar, dass das Berechnen 130 zumindest ein Berechnen 130 einer linearen Funktion umfasst, deren Verlauf im Wesentlichen dem Signalverlauf des Ansaugdruckes 10 und dem Signalverlauf des zweiten Druckes 20 entspricht oder ein Durchführen einer Regressionsanalyse umfasst. Eine lineare Funktion ist in der Fig. 2 jeweils beispielhaft für die Signalverläufe 10, 20 an der Stelle gezeigt, an der der Druck ansteigt. Die Bestimmung einer linearen Funktion bietet den Vorteil, dass aus der linearen Funktion eine Ähnlichkeit der Signalverläufe einfach und schnell, insbesondere über eine Korrelation, bestimmbar ist. Bei einer Regressionsanalyse kann eine Vielzahl von statistischen Verfahren 100 zur Bestimmung der Ähnlichkeit ausgewählt werden. Durch die Regressionsanalyse wird also der Vorteil erreicht, dass eine auf den konkreten Anwendungsfall zugeschnittene statistische Methode gewählt werden kann, welche den besten Kompromiss aus Schnelligkeit der Ausführung und Genauigkeit der Analyse ausgewählt werden kann.

In der Fig. 3 sind drei Graphen für die verschiedenen Zustände des Kurbelgehäusesystems 200 gezeigt, die den Korrelationskoeffizienten zwischen dem Signalverlauf des Ansaugdruckes 10 und dem Signalverlauf des zweiten Druckes 20 als Funktion der Zeit dargestellt sind. Bei der Aufnahme der Werte wurde eine Worldwide Harmonized Light Vehicles Test Procedure (kurz: WLTP) gemessen. Im linken der drei Graphen der Fig. 3 ist der Korrelationskoeffizient nahezu -1, wobei dies dem ordnungsgemäßen Zustand entspricht. Bei einem Leck von 6 mm (mittlerer Graph der Fig. 3) weicht der Korrelationskoeffizient von -1 ab. Bei einem noch größeren Leck von 12 mm (rechter Graph der Fig. 3) schwankt der Korrelationskoeffizient um 0. Mit anderen Worten nimmt der Korrelationskoeffzient der Signalverläufe des Ansaugdruckes 10 und des zweiten Druckes 20 bei einer Leckage ab.

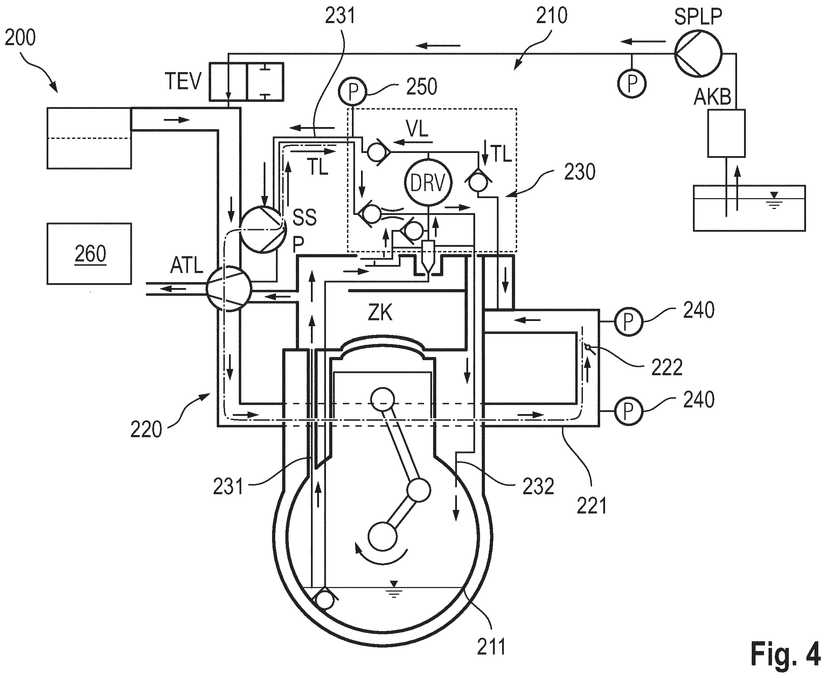

Fig. 4 zeigt schließlich ein erfindungsgemäßes Kurbelgehäusesystem 200. Wie dargestellt, weist das Kurbelgehäusesystem 200 einen Ansaugdrucksensor 240, der dazu ausgeführt ist, einen Signalverlauf eines Ansaugdruckes 10 in einem Ansaugbereich 220 eines Kurbelgehäuses 210 zu bestimmen 110, auf. Ferner hat das Kurbelgehäusesystem 200 einen zweiten Drucksensor 250, der dazu ausgeführt ist, einen Signalverlauf eines zweiten Druckes 20 in einem stromabwärts des Ansaugbereichs gelegenen Bereich 230 des Kurbelgehäuses 210 zu bestimmen 120. Ebenfalls hat das Kurbelgehäusesystem 200 einen Prozessor 260, der dazu ausgeführt ist, eine Ähnlichkeit zwischen dem Signalverlauf des Ansaugdruckes 10 und dem Signalverlauf des zweiten Druckes 20 zu berechnen 130 und die Ähnlichkeit mit einem Ähnlichkeitssollwertbereich zu vergleichen 140. Der Prozessor 260 kann zumindest mit dem Ansaugdrucksensor 240 und/oder dem zweiten Drucksensor 250 signalverbunden sein, um die Messwerte zu empfangen (hier nicht dargestellt). Eine Abweichung der Ähnlichkeit vom Ähnlichkeitssollwertbereich weist auf einen nicht ordnungsgemäßen Zustand des Kurbelgehäusesystems 200 hin.

Im Rahmen der Erfindung ist es weiterhin denkbar, dass das Bestimmen 110 des Signalverlaufs des Ansaugdruckes 10 in dem Ansaugbereich 220 als ein Bestimmen 110 des Signalverlaufs des Ansaugdruckes 10 zumindest in einem Saugrohr 221 stromabwärts einer Drosselklappe 222 oder stromaufwärts der Drosselklappe 222 ausgeführt ist. Bei einer Bestimmung des Ansaugdruckes 10 im Saugrohr 221 stromabwärts einer Drosselklappe 222 kann der Vorteil erreicht werden, dass ein gegenüber dem Umgebungsdruck leicht verringerter Druck gemessen werden kann. Bei einer Messung stromaufwärts der Drosselklappe 222 liegt entweder ein Umgebungsdruck oder ein Druck an, welcher durch einen Abgasturbolader gegenüber dem Druck stromabwärts der Drosselklappe 222 leicht erhöht ist. Es kann ebenfalls vorgesehen sein, dass der Ansaugdruck 10 als Mittelwert von Messungen stromabwärts der Drosselklappe 222 und stromaufwärts der Drosselklappe 222 ausgeführt ist. Hierdurch können Messfehler eines einzelnen Sensors abgemildert werden.

Es kann ferner vorgesehen sein, dass auf Basis von Druckmessungen stromabwärts der Drosselklappe 222 und stromaufwärts der Drosselklappe 222 eine Plausibilitätsanalyse durchgeführt wird. Hierdurch wird der Vorteil erreicht, dass ein defekter Drucksensor erkennbar ist.

Im Rahmen der Erfindung ist es weiterhin denkbar, dass das Bestimmen 120 des Signalverlaufs des zweiten Druckes 20 in dem stromabwärts des Ansaugbereichs gelegenen Bereich 230 als Bestimmen 120 des Signalverlaufs des zweiten Druckes 20 zumindest in einer Entlüftungsleitung 231 des Kurbelgehäuses 210, in einem Kurbelgehäuseblock 211 oder in einer Belüftungsleitung 232 des Kurbelgehäuses 210 ausgeführt ist. Die Messung des zweiten Druckes 20 kann je nach Betriebsmodus des Verbrennermotors vorteilhaft sein. Ferner kann die Kombination aus mehreren Messungen genutzt werden, um eine Plausibilitätsanalyse durchzuführen um derart die Funktionsfähigkeit der Drucksensoren zu überprüfen. Ferner können Mittelwerte gebildet werden, um die Auswirkungen einzelner Ausreißer auf die Berechnung der Ähnlichkeit zu verringern.

### Bezugszeichenliste

- 10: Ansaugdruck
- 20: zweiter Druck

- 100: Verfahren
- 110: Bestimmen eines Signalverlaufs eines Ansaugdruckes
- 120: Bestimmen eines Signalverlaufs eines zweiten Druckes
- 130: Berechnen
- 140: Vergleichen

- 200: Kurbelgehäusesystem
- 210: Kurbelgehäuse
- 211: Kurbelgehäuseblock
- 220: Ansaugbereich
- 221: Saugrohr
- 222: Drosselklappe
- 230: stromabwärts des Ansaugbereichs gelegener Bereich
- 231: Entlüftungsleitung
- 232: Belüftungsleitung
- 240: Ansaugdrucksensor
- 250: zweiter Drucksensor
- 260: Prozessor

## Patentansprüche

1. Verfahren (100) zur Diagnose eines Kurbelgehäusesystems (200), umfassend:
- Bestimmen (110) eines Signalverlaufs eines Ansaugdruckes (10) in einem Ansaugbereich (220) eines Kurbelgehäuses (210),
- Bestimmen (120) eines Signalverlaufs eines zweiten Druckes (20) in einem stromabwärts des Ansaugbereichs (220) gelegenen Bereichs (230)des Kurbelgehäuses (210),
- Berechnen (130) einer Ähnlichkeit zwischen dem Signalverlauf des Ansaugdruckes (10) und dem Signalverlauf des zweiten Druckes (20), und
- Vergleichen (140) der Ähnlichkeit mit einem Ähnlichkeitssollwertbereich,
wobei eine Abweichung der Ähnlichkeit vom Ähnlichkeitssollwertbereich auf einen nicht ordnungsgemäßen Zustand des Kurbelgehäusesystems (200) hinweist,
**dadurch gekennzeichnet,**
**dass** das Berechnen (130) zumindest ein Berechnen einer Korrelation oder das Berechnen einer Kovarianz zwischen dem Signalverlauf des Ansaugdruckes (10) und dem Signalverlauf des zweiten Druckes (20) umfasst, oder
**dass** das Berechnen (130) zumindest ein Berechnen einer linearen Funktion umfasst, deren Verlauf im Wesentlichen dem Signalverlauf des Ansaugdruckes (10) und dem Signalverlauf des zweiten Druckes (20) entspricht oder ein Durchführen einer Regressionsanalyse umfasst.

2. Verfahren (100) nach Anspruch 1,
**dadurch gekennzeichnet,**
**dass** das Bestimmen (110) des Signalverlaufs des Ansaugdruckes (10) in dem Ansaugbereich (220) als ein Bestimmen (110) des Signalverlaufs des Ansaugdruckes (10) zumindest in einem Saugrohr (221) stromabwärts einer Drosselklappe (222) oder stromaufwärts der Drosselklappe (222) ausgeführt ist.

3. Verfahren (100) nach Anspruch 1 oder 2,
**dadurch gekennzeichnet,**
**dass** das Bestimmen (120) des Signalverlaufs des zweiten Druckes (20) in dem stromabwärts des Ansaugbereichs (220) gelegenen Bereich (230) als Bestimmen (120) des Signalverlaufs des zweiten Druckes (20) zumindest in einer Entlüftungsleitung (231) des Kurbelgehäuses (210), in einem Kurbelgehäuseblock (211) des Kurbelgehäuses (210) oder in einer Belüftungsleitung (232) des Kurbelgehäuses (210) ausgeführt ist.

4. Verfahren (100) nach einem der vorhergehenden Ansprüche,
**dadurch gekennzeichnet,**
**dass** zumindest das Berechnen (130) der Ähnlichkeit erfolgt, wenn eine Berechnungsbedingung zumindest für den Ansaugdruck (10) oder den zweiten Druck (20) erfüllt ist, oder der Signalverlauf zumindest des Ansaugdruckes (10) oder des zweiten Druckes (20) nur Werte umfasst, bei deren Erfassung eine Aufzeichnungsbedingung erfüllt ist.

5. Kurbelgehäusesystem (200), das dazu ausgeführt ist, ein Verfahren (100) nach einem der Ansprüche 1 bis 4 auszuführen, aufweisend:
- einen Ansaugdrucksensor (240), der dazu ausgeführt ist, einen Signalverlauf eines Ansaugdruckes (10) in einem Ansaugbereich (220) eines Kurbelgehäuses (210) zu bestimmen (110),
- einen zweiten Drucksensor (250), der dazu ausgeführt ist, einen Signalverlauf eines zweiten Druckes (20) in einem stromabwärts des Ansaugbereichs (220) gelegenen Bereichs (230) des Kurbelgehäuses (210) zu bestimmen (120),
- einen Prozessor (260), der dazu ausgeführt ist, eine Ähnlichkeit zwischen dem Signalverlauf des Ansaugdruckes (10) und dem Signalverlauf des zweiten Druckes (20) zu berechnen (130) und die Ähnlichkeit mit einem Ähnlichkeitssollwertbereich zu vergleichen (140),
wobei eine Abweichung der Ähnlichkeit vom Ähnlichkeitssollwertbereich auf einen nicht ordnungsgemäßen Zustand des Kurbelgehäusesystems (200) hinweist.

6. Fahrzeug, aufweisend zumindest ein Kurbelgehäusesystem (200) nach Anspruch 5.

7. Computerprogrammprodukt, umfassend Befehle, die bei der Ausführung des Programms durch einen Computer, insbesondere einen Prozessor (260) eines Kurbelgehäusesystems (200) nach Anspruch 5, diesen veranlassen, ein Verfahren (100) nach einem der Ansprüche 1 bis 4 auszuführen.

## Claims

1. Method (100) for diagnosing a crankcase system (200), comprising:
- determining (110) a signal curve of an intake pressure (10) in an intake region (220) of a crankcase (210),
- determining (120) a signal curve of a second pressure (20) in a region (230) of the crankcase (210) located downstream of the intake region (220),
- calculating (130) a similarity between the signal curve of the intake pressure (10) and the signal curve of the second pressure (20), and
- comparing (140) the similarity to a similarity target value range,
a deviation of the similarity from the similarity target value range indicating an improper condition of the crankcase system (200),
**characterized in that**
calculating (130) comprises at least one calculation of a correlation or the calculation of a covariance between the signal curve of the intake pressure (10) and the signal curve of the second pressure (20), or
**in that** calculating (130) comprises at least one calculation of a linear function, the curve of which substantially corresponds to the signal curve of the intake pressure (10) and the signal curve of the second pressure (20), or comprises performing a regression analysis.

2. Method (100) according to claim 1,
**characterized in that**
determining (110) the signal curve of the intake pressure (10) in the intake region (220) is carried out as determining (110) the signal curve of the intake pressure (10) at least in an intake pipe (221) downstream of a throttle valve (222) or upstream of the throttle valve (222).

3. Method (100) according to claim 1 or 2,
**characterized in that**
determining (120) the signal curve of the second pressure (20) in the region (230) located downstream of the intake region (220) is carried out as determining (120) the signal curve of the second pressure (20) at least in a vent line (231) of the crankcase (210), in a crankcase block (211) of the crankcase (210) or in a vent line (232) of the crankcase (210).

4. Method (100) according to any of the preceding claims,
**characterized in that**
at least calculating (130) the similarity is carried out if a calculation condition is met at least for the intake pressure (10) or the second pressure (20), or the signal curve of at least the intake pressure (10) or the second pressure (20) only comprises values for which a recording condition is met when they are acquired.

5. Crankcase system (200) designed to carry out a method (100) according to any of claims 1 to 4, having:
- an intake pressure sensor (240) designed to determine (110) a signal curve of an intake pressure (10) in an intake region (220) of a crankcase (210),
- a second pressure sensor (250) designed to determine (120) a signal curve of a second pressure (20) in a region (230) of the crankcase (210) located downstream of the intake region (220),
- a processor (260) designed to calculate (130) a similarity between the signal curve of the intake pressure (10) and the signal curve of the second pressure (20) and to compare the similarity to a similarity target value range (140),
wherein a deviation of the similarity from the similarity target value range indicates an improper condition of the crankcase system (200).

6. Vehicle having at least one crankcase system (200) according to claim 5.

7. Computer program product comprising instructions that, when the program is executed by a computer, in particular by a processor (260) of a crankcase system (200) according to claim 5, cause the computer to carry out a method (100) according to any of claims 1 to 4.

## Revendications

1. Procédé (100) pour le diagnostic d'un système de carter moteur (200), comprenant :
- la détermination (110) d'une courbe de signal d'une pression d'admission (10) dans une zone d'admission (220) d'un carter moteur (210),
- la détermination (120) d'une courbe de signal d'une seconde pression (20) dans une zone (230) du carter moteur (210) située en aval de la zone d'admission (220),
- le calcul (130) d'une similitude entre la courbe de signal de la pression d'admission (10) et la courbe de signal de la seconde pression (20), et
- la comparaison (140) de la similitude avec une plage de valeurs de consigne de similitude,
dans lequel un écart entre la similitude et la plage de valeurs de consigne de similitude indique un état non conforme du système de carter moteur (200),
**caractérisé en ce**
**que** le calcul (130) comprend au moins un calcul d'une corrélation ou le calcul d'une covariance entre la courbe de signal de la pression d'admission (10) et la courbe de signal de la seconde pression (20), ou
**que** le calcul (130) comprend au moins un calcul d'une fonction linéaire dont la courbe correspond sensiblement à la courbe de signal de la pression d'admission (10) et à la courbe de signal de la seconde pression (20), ou une réalisation d'une analyse de régression.

2. Procédé (100) selon la revendication 1,
**caractérisé en ce**
**que** la détermination (110) de la courbe de signal de la pression d'admission (10) dans la zone d'admission (220) est exécutée en tant que détermination (110) de la courbe de signal de la pression d'admission (10) au moins dans un collecteur d'admission (221) en aval d'un papillon des gaz (222) ou en amont du papillon des gaz (222).

3. Procédé (100) selon la revendication 1 ou 2,
**caractérisé en ce**
**que** la détermination (120) de la courbe de signal de la seconde pression (20) dans la zone (230) située en aval de la zone d'admission (220) est exécutée en tant que détermination (120) de la courbe de signal de la seconde pression (20) au moins dans une conduite d'évacuation d'air (231) du carter moteur (210), dans un bloc de carter moteur (211) du carter moteur (210) ou dans une conduite d'aération (232) du carter moteur (210).

4. Procédé (100) selon l'une des revendications précédentes,
**caractérisé en ce**
**qu'**au moins le calcul (130) de la similitude est effectué lorsqu'une condition de calcul est remplie au moins pour la pression d'admission (10) ou pour la seconde pression (20), ou que la courbe de signal au moins de la pression d'admission (10) ou de la seconde pression (20) comprend uniquement des valeurs pour lesquelles une condition d'enregistrement est remplie lors de leur détection.

5. Système de carter moteur (200) configuré pour exécuter un procédé (100) selon l'une des revendications 1 à 4, présentant :
- un capteur de pression d'admission (240) configuré pour déterminer (110) une courbe de signal d'une pression d'admission (10) dans une zone d'admission (220) d'un carter moteur (210),
- un second capteur de pression (250) configuré pour déterminer (120) une courbe de signal d'une seconde pression (20) dans une zone (230) du carter moteur (210) située en aval de la zone d'admission (220),
- un processeur (260) configuré pour calculer (130) une similitude entre la courbe de signal de la pression d'admission (10) et la courbe de signal de la seconde pression (20) et pour comparer (140) la similitude avec une plage de valeurs de consigne de similitude,
dans lequel un écart entre la similitude et la plage de valeurs de consigne de similitude indique un état non conforme du système de carter moteur (200).

6. Véhicule, présentant au moins un système de carter moteur (200) selon la revendication 5.

7. Produit-programme d'ordinateur, comprenant des instructions qui, lors de l'exécution du programme par un ordinateur, en particulier par un processeur (260) d'un système de carter moteur (200) selon la revendication 5, amènent celui-ci à exécuter un procédé (100) selon l'une des revendications 1 à 4.
